# EUROPÄISCHE PATENTANMELDUNG

(11) **EP 4 644 799 A2**
(43) Veröffentlichungstag der Anmeldung: **05.11.2025**
(21) Anmeldenummer: 25172181.7
(22) Anmeldetag: 24.04.2025
(51) Int. Cl.: F25B 5/02, F25B 25/00, F25B 31/00, F25D 11/00

(54) **TEMPERIERVORRICHTUNG, INSBESONDERE FÜR LABORSCHRÄNKE, KLIMASCHRÄNKE, KÄLTESCHRÄNKE ODER UMWELTSIMULATIONSSCHRÄNKE**

(30) Priorität: 03.05.2024 DE 102024112545
(71) Anmelder: Binder GmbH, 78532 Tuttlingen (DE)
(72) Erfinder: Höfner, Christian, 78259 Mühlhausen-Ehingen (DE); Winkler, Dr., Hartmut, 78532 Tuttlingen (DE); Buschle, Jochen, 78532 Tuttlingen (DE)
(74) Vertreter: Westphal, Mussgnug & Partner Patentanwälte mbB

(57) **Zusammenfassung**

Die Erfindung betrifft eine Temperiervorrichtung (10-1, 10-2, 10-3) mit einem Kühlkreislauf (20) mit einem Kälteträger, wobei der Kühlkreislauf (20) eine Kältequelle (22), einen Verbraucher-Wärmetauscher (24) im Rücklauf (22b) der Kältequelle (22) und eine Pumpe (26) aufweist, wobei die Kältequelle (22) Teil eines zweiten Wärmetauschers (50) ist, über welchen ein externer Kältekreislauf (60) mit einem Kältemittel an den Kühlkreislauf (20) angekoppelt ist, wobei der externe Kältekreislauf (60) einen Verdichter (62), einen Kondensator (64) und ein erstes Drosselorgan (66) aufweist.

## Beschreibung

Die Erfindung betrifft eine Temperiervorrichtung, insbesondere für Laborschränke, Klimaschränke, Kälteschränke oder Umweltsimulationsschränke.

Es ist bekannt eine Temperiervorrichtung zur Temperierung eines Probenraums von Laborschränken, Klimaschränken, Kälteschränken oder Umweltsimulationsschränken einzusetzen, um die Temperatur in dem Probenraum auf eine gewünschte Weise einzustellen.

Die DE 10 2004 040 737 A1 offenbart eine Vorrichtung zur Steuerung einer konstanten Vorlauftemperatur bei der Flüssigkeitskühlung und in Wärmepumpen, wobei ein eine Speicherflüssigkeit enthaltender Speicherkreis für den Energietransport vorgesehen ist, der jeweils mit einem Kühl-/Heizkreis und einem Verbraucher verbunden ist, wobei in den Speicherkreis ein Speicherbehälter integriert ist, und wobei in dem Speicherkreis in die Verbindung zum Kühl-/Heizkreis ein von Speicherflüssigkeit in einer Richtung durchströmbarer Pufferspeicher und der Verbraucher hintereinander geschaltet sind und parallel zu dem Pufferspeicher eine in ihrem Durchfluss regelbare Verbindung zwischen einer Zulaufleitung und einer Ablaufleitung des Pufferspeichers vorgesehen ist. Eine derartige Vorrichtung ermöglicht es, die Vorlauftemperatur konstant zu halten und zu regeln, falls gewünscht, kann die Kühl- bzw. Heizleistung am Verbraucher begrenzt werden. Der Pufferspeicher wirkt dabei als Energiespeicher und die Energie wird bedarfsgerecht entnommen und gespeichert. Eine Ausschaltzeit eines Verdichters kann überbrückt werden, ohne dass die Vorlauftemperatur ansteigt oder absinkt. Allerdings ist ein Pufferspeicher aufwändig und erfordert zusätzliche Energie.

Die Aufgabe der Erfindung besteht daher darin, eine Temperiervorrichtung bereitzustellen, mit welcher eine effektivere Temperierung möglich ist.

Die Aufgabe wird erfindungsgemäß gelöst durch eine Temperiervorrichtung mit den Merkmalen des Patentanspruchs 1.

Vorteilhafte Ausgestaltungen und Weiterbildungen der Erfindung sind in den abhängigen Ansprüchen angegeben.

Bei der erfindungsgemäßen Temperiervorrichtung mit einem Kühlkreislauf mit einem Kälteträger, wobei der Kühlkreislauf eine Kältequelle, einen Verbraucher-Wärmetauscher im Rücklauf der Kältequelle und eine Pumpe aufweist, wobei die Kältequelle Teil eines zweiten Wärmetauschers ist, über welchen ein externer Kältekreislauf mit einem Kältemittel an den Kühlkreislauf angekoppelt ist, weist der externe Kältekreislauf einen Verdichter, einen Kondensator und ein erstes Drosselorgan auf. Bei einem Verdichter handelt es sich um einen drehzahlgeregelten Verdichter. Durch Anordnung eines Verdichters in Kombination mit einem Drosselorgan im externen Kältekreislauf wird eine Reduktion der erforderlichen Energie ermöglicht, da eine Bereitstellung der benötigten Kälte situationsabhängig erfolgen kann. Ein Kältereservoir oder ein Pufferspeicher, in welchem Energie, insbesondere in Form von gekühltem Kälteträger vorgehalten werden muss, kann damit entfallen.

Vorzugsweise ist der Verdichter im Rücklauf des zweiten Wärmetauschers und das erste Drosselorgan im Vorlauf des zweiten Wärmetauschers angeordnet. Eine derartige Anordnung ermöglicht eine Kühlung.

Vorteilhafterweise ist der Verdichter als Inverterverdichter ausgebildet. Dies ermöglicht eine effiziente Energieeinsparung.

Gemäß einer besonders bevorzugten Ausführungsform der Erfindung ist das erste Drosselorgan als Magnetventil, insbesondere als Magnetventil mit einem Kapillarrohr, oder als stetiges Ventil ausgebildet. Magnetventile sind besonders robust, stetige Ventile lassen sich besonders gut, vorzugsweise stufenlos, ansteuern und ermöglichen daher eine besonders feine Dosierung.

Eine besonders vorteilhafte Ausgestaltung der Erfindung sieht vor, dass ein zweites Drosselorgan und ein Verdampfer parallel zu dem ersten Drosselorgan und dem zweiten Wärmetauscher angeordnet sind. Ein derartiger Verdampfer kann eine Entfeuchtung des Laborschranks, Klimaschranks, Kälteschranks oder Umweltsimulationsschranks ermöglichen, insbesondere mittels des zweiten Drosselorgans eine gezielte Entfeuchtung. Das zweite Drosselorgan ist insbesondere unabhängig von dem ersten Drosselorgan ansteuerbar.

Vorzugsweise ist der Verdampfer als Rollbondverdampfer ausgebildet. Ein derartiger Verdampfer ist einfach und kostengünstig herzustellen und kann insbesondere platzsparend ausgebildet sein.

Vorzugsweise ist das zweite Drosselorgan als Magnetventil, insbesondere als Magnetventil mit einem Kapillarrohr, oder als stetiges Ventil ausgebildet. Magnetventile sind besonders robust, stetige Ventile lassen sich besonders gut, vorzugsweise stufenlos, ansteuern und ermöglichen daher eine besonders feine Dosierung.

Vorteilhafterweise erfolgt über ein drittes Drosselorgan, welches insbesondere parallel zu dem ersten Drosselorgan und dem zweiten Wärmetauscher angeordnet ist, eine Rückeinspritzung von Kältemittel in den Verdichter. Die Rückeinspritzung kann über das dritte Drosselorgan geregelt erfolgen, so dass insbesondere gezielt die erforderliche Menge an Kältemittel rückgeführt wird, wodurch eine Kühlung des Verdichters ermöglicht wird. Das dritte Drosselorgan ist insbesondere unabhängig von dem ersten und, falls vorhanden, von dem zweiten, Drosselorgan ansteuerbar.

Vorzugsweise ist das dritte Drosselorgan als Magnetventil, insbesondere als Magnetventil mit einem Kapillarrohr, oder als stetiges Ventil ausgebildet. Magnetventile sind besonders robust, stetige Ventile lassen sich besonders gut, vorzugsweise stufenlos, ansteuern und ermöglichen daher eine besonders feine Dosierung.

Das erste Drosselorgan und/oder das zweite Drosselorgan und/oder das dritte Drosselorgan sind vorzugsweise regelbar ausgebildet.

Gemäß einer bevorzugten Ausführungsform der Erfindung ist der zweite Wärmetauscher als Plattenwärmetauscher oder Koaxialrohrwärmetauscher ausgebildet ist. Derartige Wärmetauscher können kompakt aufgebaut sein und eine gute Wärmeübertragung ermöglichen.

Vorzugsweise weist der Kühlkreislauf als Kälteträger ein nicht brennbares Fluid, beispielsweise ein Wasser-Glycol-Gemisch, ein Siliconöl oder eine Salzlösung, auf. Dadurch können je nach Erfordernissen an den Probenraum der jeweiligen Laborschränke, Klimaschränke, Kälteschränke oder Umweltsimulationsschränke die entsprechenden Sicherheitsanforderungen erfüllt werden.

Gemäß einer vorteilhaften Weiterbildung der Erfindung weist der externe Kältekreislauf als Kältemittel einen Kohlenwasserstoff, insbesondere Propan oder Isobutan, oder CO2 auf. Derartige Kältemittel stellen eine klimafreundliche Alternative zu halogenierten Kältemitteln dar, da sie nicht wesentlich zum Treibhauseffekt beitragen, wobei jedoch an die Verwendung derartiger Kältemittel aufgrund der Brennbarkeit erhöhte Sicherheitsanforderungen gestellt werden. Dadurch, dass der Kühlkreislauf und der externe Kältekreislauf voneinander separiert sind, besteht die Möglichkeit, im externen Kältekreislauf brennbare Kältemittel zu verwenden.

Vorzugsweise ist die Pumpe des Kühlkreislaufs als Umwälzpumpe, insbesondere als drehzahlgeregelte Umwälzpumpe, ausgebildet. Eine drehzahlgeregelte Pumpe kann besonders energieeffizient betrieben werden. Die Pumpe kann beispielsweise als Solepumpe, Glykolpumpe oder Wasserpumpe ausgebildet sein.

Eine bevorzugte Ausführungsform der Erfindung sieht vor, dass in dem Kühlkreislauf ein Überdruckventil, ein Entlüftungsventil und/oder ein Membranausdehnungsgefäß oder ein gasüberlagerter Kühlkreislauf angeordnet ist. Durch ein Membranausdehnungsgefäß oder einen gasüberlagerten Kühlkreislauf kann einer Volumenausdehnung des Kälteträgers Rechnung getragen werden, wobei kein Kälteträger abgelassen werden muss. Ein Überdruckventil kann als Sicherheitsventil bei Überschreiten eines Maximalwerts des Drucks zur Druckreduktion Kälteträger ablassen. Über ein Entlüftungsventil kann Luft oder sonstiges Gas abgelassen werden.

Ein erfindungsgemäßer Laborschrank, Klimaschrank, Kälteschrank oder Umweltsimulationsschrank mit einem Probenraum weist eine erfindungsgemäße Temperiervorrichtung auf, wobei der Verbraucher-Wärmetauscher derart angeordnet ist, dass er den Probenraum temperiert. Die Vorteile eines derartigen Laborschranks, Klimaschranks, Kälteschranks oder Umweltsimulationsschranks entsprechen den anhand der Temperiervorrichtung beschriebenen Vorteilen.

Eine bevorzugte Weiterbildung der Erfindung sieht vor, dass der externe Kältekreislauf, vorzugsweise einschließlich des zweiten Wärmetauschers, in einem von dem Probenraum getrennten Maschinenraum angeordnet ist, welcher insbesondere Lüftungsöffnungen aufweist. Insbesondere wird es bei einer derartigen Trennung zwischen externem Kältekreislauf und Kühlkreislauf ermöglicht, in dem externen Kältekreislauf ein brennbares Kältemittel zu verwenden, da der externe Kältekreislauf in einem von dem Probenraum getrennten Maschinenraum angeordnet ist, welcher gut belüftet werden kann, so dass dort die Sicherheitsanforderungen an Kältekreisläufe mit brennbarem Kältemittel erfüllt werden können, was in einem geschlossenen Probenraum unter Vorhandensein von möglichen Zündquellen nicht möglich ist. Der Energieeintrag aus dem Probenraum zum Verbraucher-Wärmetauscher zur Kühlung des Probenraums kann mittels des Kühlkreislaufs erfolgen, wobei der zweite Wärmetauscher außerhalb des Probenraums in dem Maschinenraum angeordnet ist.

In einer vorteilhaften Weiterbildung ist der Probenraum von einer Innenwandung begrenzt, welche zumindest abschnittsweise von einer Außenwandung umgeben ist, wobei auf einer Außenseite der Außenwandung zumindest abschnittsweise eine Isolierung angeordnet ist und die Isolierung von einem Gehäuse umgeben ist, wobei der Verbraucher-Wärmetauscher zwischen der Innenwandung und der Außenwandung angeordnet ist. Eine derartige Anordnung ermöglicht einen besonders effektiven Energieeintrag von dem Probenraum in den Verbraucher-Wärmetauscher.

Eine besonders bevorzugte Ausgestaltung der Erfindung sieht vor, dass der Verdampfer zwischen der Außenwandung und der Isolierung angeordnet ist. Eine derartige Anordnung ermöglicht eine besonders effektive Entfeuchtung des Probenraums des Laborschranks, Klimaschranks, Kälteschranks oder Umweltsimulationsschranks.

Die Erfindung wird anhand von Ausführungsbeispielen im Folgenden detailliert erläutert. Es zeigen
- Fig. 1: eine schematische Darstellung eines ersten Ausführungsbeispiels einer erfindungsgemäßen Temperiervorrichtung mit einem Kühlkreislauf mit einer Kältequelle, einem Verbraucher-Wärmetauscher und einer Pumpe sowie einem externen Kältekreislauf mit einem Verdichter, einem Kondensator und einem ersten regelbaren Drosselorgan, wobei der Kühlkreislauf und der externe Kältekreislauf über einen zweiten Wärmetauscher miteinander gekoppelt sind,
- Fig. 2: eine schematische Darstellung eines zweiten Ausführungsbeispiels einer erfindungsgemäßen Temperiervorrichtung, welches der in Fig. 1 dargestellten Tempe- riervorrichtung entspricht und zusätzlich ein drittes Drosselorgan zur Rückeinspritzung in den Verdichter aufweist,
- Fig. 3: eine schematische Darstellung eines dritten Ausführungsbeispiels einer erfindungsgemäßen Temperiervorrichtung, welches der in Fig. 2 dargestellten Temperiervorrichtung entspricht und zusätzlich ein zweites Drosselorgen und einen Verdampfer parallel zu dem ersten Drosselorgan und dem zweiten Wärmetauscher aufweist,
- Fig. 4: eine schematische Darstellung eines Laborschranks, Klimaschranks, Kälteschranks oder Umweltsimulationsschranks mit einer Temperiervorrichtung gemäß Fig. 1 und
- Fig.5: eine schematische Darstellung des Laborschranks, Klimaschranks, Kälteschranks oder Umweltsimulationsschranks gemäß Fig. 4, welcher zusätzlich einen Verdampfer zur Entfeuchtung aufweist.

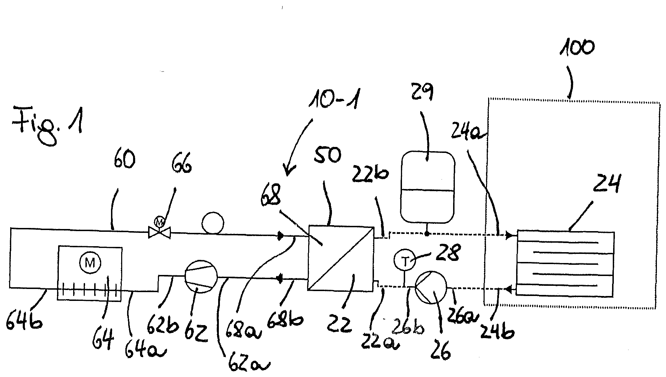

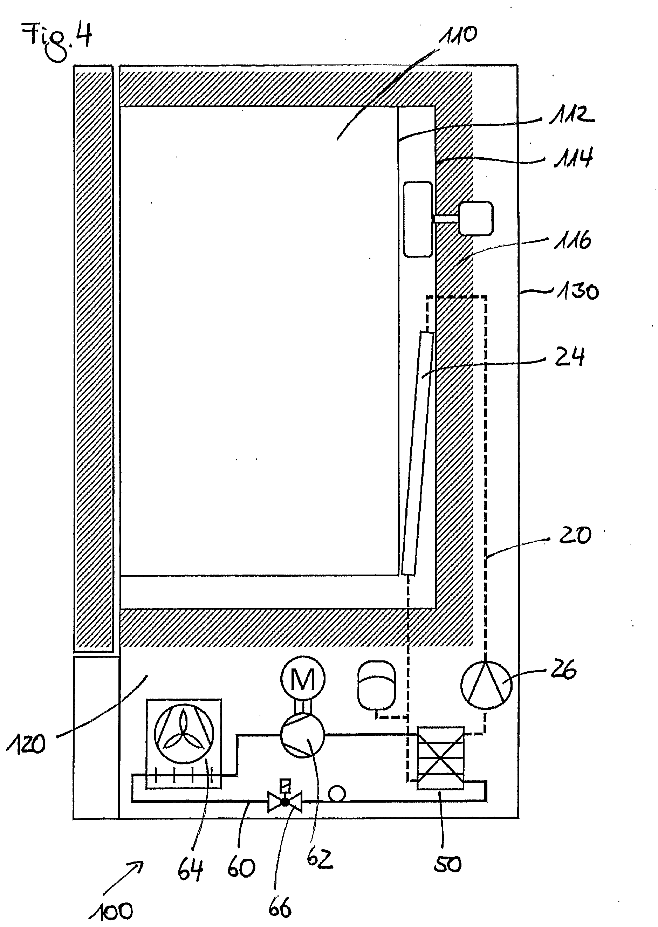

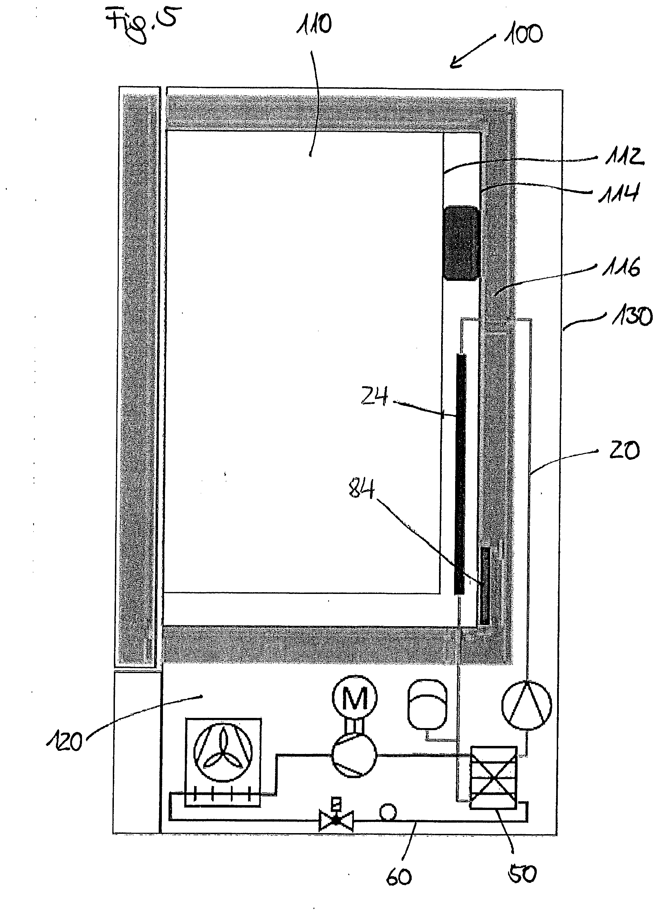

Die Figuren 1 bis 3 zeigen verschiedene Ausführungsbeispiele von Temperiervorrichtungen 10-1, 10-2 und 10-3, die Figuren 4 und 5 illustrieren den Einbau einer solchen Temperiervorrichtung. Gleiche Bezugszeichen bezeichnen gleiche oder funktionsgleiche Komponenten, wobei zur besseren Übersicht nicht sämtliche Bezugszeichen in sämtlichen Figuren angegeben sind.

Figur 1 zeigt eine schematische Darstellung eines ersten Ausführungsbeispiels einer Temperiervorrichtung 10-1 mit einem zu Illustrationszwecken gestrichelt dargestellten Kühlkreislauf 20, in welchem einem Kälteträger angeordnet ist. Bei dem Kälteträger handelt es sich um ein Fluid, welches durch den Kühlkreislauf zirkulieren kann. Der Kälteträger kann ein nicht brennbares Fluid, beispielsweise ein Wasser-Glycol-Gemisch, ein Siliconöl oder eine Salzlösung, sein.

Der Kühlkreislauf 20 weist eine Kältequelle 22 mit einem Vorlauf 22a und einem Rücklauf 22b, einen Verbraucher-Wärmetauscher 24 mit einem Vorlauf 24a und einem Rücklauf 24b, welcher im Rücklauf 22a der Kältequelle 22 angeordnet ist, und eine Pumpe 26 im Rücklauf 24b des Verbraucher-Wärmetauschers 24 und im Vorlauf 22a der Kältequelle 22 auf. Die Pumpe 26 kann alternativ auch im Vorlauf 24a des Verbraucher-Wärmetauschers 24 angeordnet sein. Die Pumpe 26 des Kühlkreislaufs 20 kann als Umwälzpumpe, insbesondere als drehzahlgeregelte Umwälzpumpe, ausgebildet sein. Die Ansteuerung erfolgt über eine nicht dargestellte Steuereinheit. Der Verbraucher-Wärmetauscher 24 kann als Lamellenwärmeübertrager, Plattenwärmetauscher oder Mikrokanalwärmetauscher ausgebildet sein. Je nach Ausgestaltung kann der Verbraucher-Wärmetauscher 24 schräg zur Vertikalen (vgl. Fig. 4), beispielsweise im Falle eines Lamellenwärmeübertragers oder eines Mikrokanalwärmetauschers, oder parallel zur Vertikalen (vgl. Fig. 5), beispielsweise im Falle eines Plattenwärmetauschers, angeordnet sein.

In dem Kühlkreislauf 20, beispielsweise im Rücklauf 26b der Pumpe 26, kann ein Temperatursensor 28 angeordnet sein.

In dem Kühlkreislauf 20 können weiterhin ein Überdruckventil und oder ein Entlüftungsventil angeordnet sein. Weiterhin kann der Kühlkreislauf 20 Membranausdehnungsgefäß 29 oder einen gasüberlagerten Kühlkreislauf aufweisen.

Die Kältequelle 22 ist Teil eines zweiten Wärmetauschers 50, über welchen ein externer Kältekreislauf 60 an den Kühlkreislauf 20 angekoppelt ist. Zu Illustrationszwecken ist der Kältekreislauf 60 mit durchgezogenen Linien dargestellt, um ihn von dem Kühlkreislauf 20 besser unterscheiden zu können. In dem Kältekreislauf 60 ist ein Kältemittel angeordnet. Bei dem Kältemittel handelt es sich um ein Fluid, welches durch den Kältekreislauf zirkulieren kann. Der Kältekreislauf 60 und der Kühlkreislauf 20 sind dabei in fluidtechnischer Hinsicht getrennt. Lediglich über den zweiten Wärmetauscher 50 kann thermische Energie von dem Kälteträger des Kühlkreislaufs 20 auf das Kältemittel des Kältekreislaufs 60 übertragen werden. Das Kältemittel kann ein brennbares Fluid, beispielsweise ein Kohlenwasserstoff, insbesondere Propan oder Isobutan, oder CO2 sein.

Der externe Kältekreislauf 60 weist einen Verdichter 62 mit einem Vorlauf 62a und einem Rücklauf 62b, einen Kondensator 64 mit einem Vorlauf 64a und einem Rücklauf 64b sowie ein erstes Drosselorgan 66 auf. Weiterhin weist der Kältekreislauf 60 eine Kältequelle 68 mit einem Vorlauf 68a und einem Rücklauf 68b auf, welche Teil des zweiten Wärmetauschers 50 ist und auf welchen thermische Energie von der Kältequelle 22 des Kühlkreislaufs 20 übertragen werden kann.

Im dargestellten Ausführungsbeispiel ist der Wärmetauscher 50 als Gegenstrom-Wärmetauscher ausgebildet. Es ist grundsätzlich aber auch möglich, den Wärmetauscher 50 im Gleichstrom zu betreiben. Der zweite Wärmetauscher 50 kann als Plattenwärmetauscher oder Koaxialrohrwärmetauscher ausgebildet sein.

Der Verdichter 62 ist insbesondere im Rücklauf des zweiten Wärmetauschers 50, insbesondere im Rücklauf 68b der Kältequelle 68 des Kältekreislaufs 60, und das erste Drosselorgan 66 im Vorlauf des zweiten Wärmetauschers 50, insbesondere im Vorlauf 68a der Kältequelle 68 des Kältekreislaufs 60, angeordnet. Der Kondensator 64 ist im Rücklauf 62b des Verdichters und im Vorlauf 66a des ersten Drosselorgans 66 angeordnet.

Das erste Drosselorgan 66 kann als Magnetventil, insbesondere als Magnetventil mit einem Kapillarrohr, oder als stetiges Ventil ausgebildet sein. Die Ansteuerung oder Regelung erfolgt über eine nicht dargestellte Ansteuer- oder Regeleinrichtung.

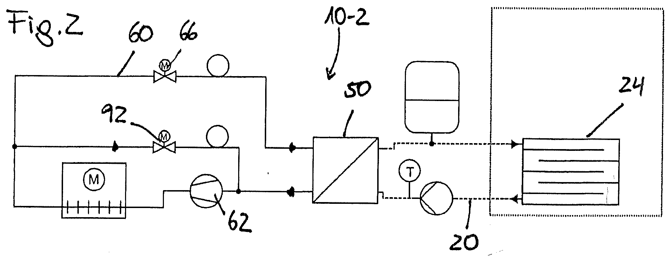

Figur 2 zeigt eine schematische Darstellung eines zweiten Ausführungsbeispiels einer Temperiervorrichtung 10-2, welches sich von dem ersten Ausführungsbeispiel der Temperiervorrichtung 10-1 im Wesentlichen dadurch unterscheidet, dass ein drittes Drosselorgan 92 vorhanden sein kann, mittels welchem eine Rückeinspritzung von Kältemittel in den Verdichter 62 erfolgen kann. Dazu ist das dritte Drosselorgan 92 insbesondere parallel zu dem ersten Drosselorgan 66 und dem zweiten Wärmetauscher 50 angeordnet. Mit anderen Worten zweigt im vorliegenden Ausführungsbeispiel eine parallele Leitung, in welcher das dritte Drosselorgan 92 angeordnet ist, aus dem Rücklauf des Kondensators 64 des Kältekreislaufs 60 in den Vorlauf 62a des Verdichters 62.

Das dritte Drosselorgan 92 kann als Magnetventil, insbesondere als Magnetventil mit einem Kapillarrohr, oder als stetiges Ventil ausgebildet sein. Die Ansteuerung oder Regelung erfolgt über eine nicht dargestellte Ansteuer- oder Regeleinrichtung, wobei die Ansteuerung oder Regelung insbesondere unabhängig von der Ansteuerung oder Regelung des ersten Drosselorgans 66 erfolgen kann.

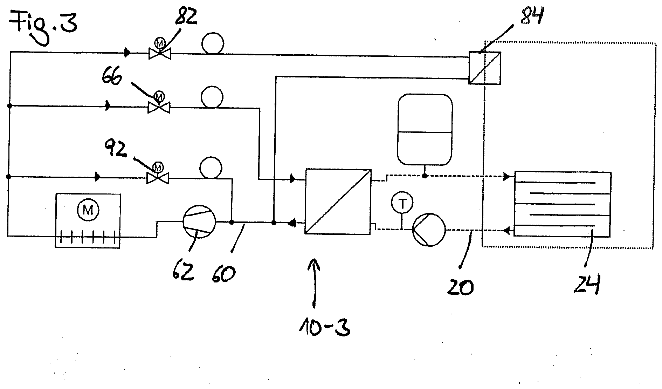

Figur 3 zeigt eine schematische Darstellung eines dritten Ausführungsbeispiels einer Temperiervorrichtung 10-3, welches sich von dem zweiten Ausführungsbeispiel der Temperiervorrichtung 10-2 im Wesentlichen dadurch unterscheidet, dass zusätzlich ein zweites Drosselorgan 82 und ein Verdampfer 84 parallel zu dem ersten Drosselorgan 66 und dem zweiten Wärmetauscher 50 angeordnet sein können. Mit anderen Worten zweigt im vorliegenden Ausführungsbeispiel eine parallele Leitung, in welcher das zweite Drosselorgan 82 und der Verdampfer 84 angeordnet sind, aus dem Rücklauf des Kondensators 64 des Kältekreislaufs 60 in den Vorlauf 62a des Verdichters 62. Dabei sei darauf hingewiesen, dass das zweite Drosselorgan 82 und der Verdampfer 84 grundsätzlich auch in dem ersten Ausführungsbeispiel der Temperiervorrichtung 10-1 zur Anwendung kommen kann und somit unabhängig von dem Vorhandensein des dritten Drosselorgans 92 ist.

Das zweite Drosselorgan 82 kann als Magnetventil, insbesondere als Magnetventil mit einem Kapillarrohr, oder als stetiges Ventil ausgebildet sein. Die Ansteuerung oder Regelung erfolgt über eine nicht dargestellte Ansteuer- oder Regeleinrichtung., wobei die Ansteuerung oder Regelung insbesondere unabhängig von der Ansteuerung oder Regelung des ersten Drosselorgans 66 und, falls vorhanden, unabhängig von der Ansteuerung oder Regelung des dritten Drosselorgans 92 erfolgen kann.

Der Verdampfer 84 kann als Rollbondverdampfer ausgebildet sein.

Figur 4 zeigt eine schematische Darstellung eines Laborschranks, Klimaschranks, Kälteschranks oder Umweltsimulationsschranks 100 mit einem Probenraum 110 und einer Temperiervorrichtung 10-1 wie anhand der Figur 1 beschrieben, wobei der Verbraucher-Wärmetauscher 24 derart angeordnet ist, dass er den Probenraum 110 temperiert. Grundsätzlich ist der Einbau sämtlicher der Temperiervorrichtungen 10-1 bis 10-3 wie anhand der Figuren 1 bis 3 beschrieben in den Laborschrank, Klimaschrank, Kälteschrank oder Umweltsimulationsschrank 100 denkbar.

Der Laborschrank, Klimaschrank, Kälteschrank oder Umweltsimulationsschrank 100 weist einen von dem Probenraum 110 getrennten Maschinenraum 120 auf, wobei der externe Kältekreislauf 60, vorzugsweise einschließlich des zweiten Wärmetauschers 50, in dem Maschinenraum 120 angeordnet ist. Der Maschinenraum 120 weist insbesondere Lüftungsöffnungen auf und kann dadurch die Sicherheitsanforderungen zur Verwendung von brennbarem Kältemittel, insbesondere Kohlenwasserstoffen wie Propan oder Isobutan, erfüllen. Vorteilhafterweise ist lediglich der Verbraucher-Wärmetauscher 24 der Temperiervorrichtung 10-1 in oder an dem Probenraum 110 angeordnet, während die weiteren Komponenten der Temperiervorrichtung 10-1 räumlich getrennt in dem Maschinenraum 120 angeordnet sind.

Der Probenraum 110 kann von einer Innenwandung 112 begrenzt sein, welche zumindest abschnittsweise von einer Außenwandung 114 umgeben sein kann, wobei auf einer Außenseite der Außenwandung 114 zumindest abschnittsweise eine Isolierung 116 angeordnet und die Isolierung 116 von einem Gehäuse 130 umgeben sein kann. Der Verbraucher-Wärmetauscher 24 ist vorteilhafterweise zwischen der Innenwandung 112 und der Außenwandung 114 angeordnet, um einen guten Temperatureintrag aus dem Probenraum 110 ermöglichen zu können.

Figur 5 zeigt den Laborschrank, Klimaschrank, Kälteschrank oder Umweltsimulationsschrank 100 gemäß Fig. 4, wobei in der Temperiervorrichtung 10-1 zusätzlich der Verdampfer 84 wie anhand von Figur 3 erläutert angeordnet ist. Dabei ist der Verdampfer 84 insbesondere zwischen der Außenwandung 114 und der Isolierung 116 angeordnet, um eine Entfeuchtung ermöglichen zu können.

### Bezugszeichenliste

- 10-1 bis 10-3: Temperiervorrichtung
- 20: Kühlkreislauf
- 22: Kältequelle
- 22a: Vorlauf
- 22b: Rücklauf
- 24: Verbraucher-Wärmetauscher
- 24a: Vorlauf
- 24b: Rücklauf
- 26: Pumpe
- 26a: Vorlauf
- 26b: Rücklauf
- 28: Temperatursensor
- 29: Membranausdehnungsgefäß
- 50: zweiter Wärmetauscher
- 60: externer Kältekreislauf
- 62: Verdichter
- 62a: Vorlauf
- 62b: Rücklauf
- 64: Kondensator
- 64a: Vorlauf
- 64b: Rücklauf
- 66: erstes Drosselventil
- 68: Kältequelle
- 68a: Vorlauf
- 68b: Rücklauf
- 82: zweites Drosselventil
- 84: Verdampfer
- 92: drittes Drosselventil
- 100: Laborschrank, Klimaschrank, Kälteschrank oder Umweltsimulationsschrank
- 110: Probenraum
- 112: Innenwandung
- 114: Außenwandung
- 116: Isolierung
- 120: Maschinenraum
- 130: Gehäuse

## Patentansprüche

1. Temperiervorrichtung (10-1, 10-2, 10-3) mit einem Kühlkreislauf (20) mit einem Kälteträger, wobei der Kühlkreislauf (20) eine Kältequelle (22), einen Verbraucher-Wärmetauscher (24) im Rücklauf (22b) der Kältequelle (22) und eine Pumpe (26) aufweist, wobei die Kältequelle (22) Teil eines zweiten Wärmetauschers (50) ist, über welchen ein externer Kältekreislauf (60) mit einem Kältemittel an den Kühlkreislauf (20) angekoppelt ist,
**dadurch gekennzeichnet, dass** der externe Kältekreislauf (60) einen Verdichter (62), einen Kondensator (64) und ein erstes Drosselorgan (66) aufweist.

2. Temperiervorrichtung nach Anspruch 1,
**dadurch gekennzeichnet, dass** der Verdichter (62) im Rücklauf des zweiten Wärmetauschers (50) und das erste Drosselorgan (66) im Vorlauf des zweiten Wärmetauschers (50) angeordnet ist.

3. Temperiervorrichtung nach einem der vorhergehenden Ansprüche,
**dadurch gekennzeichnet, dass** der Verdichter (62) als Inverterverdichter ausgebildet ist.

4. Temperiervorrichtung nach einem der vorhergehenden Ansprüche,
**dadurch gekennzeichnet, dass** das erste Drosselorgan (66) als Magnetventil, insbesondere als Magnetventil mit einem Kapillarrohr, ausgebildet ist.

5. Temperiervorrichtung nach einem der vorhergehenden Ansprüche,
**dadurch gekennzeichnet, dass** ein zweites Drosselorgan (82) und ein Verdampfer (84) parallel zu dem ersten Drosselorgan (66) und dem zweiten Wärmetauscher (50) angeordnet sind.

6. Temperiervorrichtung nach Anspruch 5,
**dadurch gekennzeichnet, dass** der Verdampfer (84) als Rollbondverdampfer ausgebildet ist.

7. Temperiervorrichtung nach Anspruch 5 oder 6,
**dadurch gekennzeichnet, dass** das zweite Drosselorgan (82) als Magnetventil, insbesondere als Magnetventil mit einem Kapillarrohr, ausgebildet ist.

8. Temperiervorrichtung nach einem der vorhergehenden Ansprüche,
**dadurch gekennzeichnet, dass** über ein drittes Drosselorgan (92), welches insbesondere parallel zu dem ersten Drosselorgan (66) und dem zweiten Wärmetauscher (50) angeordnet ist, eine Rückeinspritzung von Kältemittel in den Verdichter (62) erfolgt.

9. Temperiervorrichtung nach Anspruch 8,
**dadurch gekennzeichnet, dass** das dritte Drosselorgan (92) als Magnetventil, insbesondere als Magnetventil mit einem Kapillarrohr, ausgebildet ist.

10. Temperiervorrichtung nach einem der vorhergehenden Ansprüche,
**dadurch gekennzeichnet, dass** der zweite Wärmetauscher (50) als Plattenwärmetauscher oder Koaxialrohrwärmetauscher ausgebildet ist.

11. Temperiervorrichtung nach einem der vorhergehenden Ansprüche,
**dadurch gekennzeichnet, dass** der Kühlkreislauf (20) als Kälteträger ein nicht brennbares Fluid, beispielsweise ein Wasser-Glycol-Gemisch, ein Siliconöl oder eine Salzlösung, aufweist.

12. Temperiervorrichtung nach einem der vorhergehenden Ansprüche,
**dadurch gekennzeichnet, dass** der externe Kältekreislauf (60) als Kältemittel einen Kohlenwasserstoff, insbesondere Propan oder Isobutan, aufweist.

13. Temperiervorrichtung nach einem der vorhergehenden Ansprüche,
**dadurch gekennzeichnet, dass** die Pumpe (26) des Kühlkreislaufs als Umwälzpumpe, insbesondere als drehzahlgeregelte Umwälzpumpe, ausgebildet ist.

14. Temperiervorrichtung nach einem der vorhergehenden Ansprüche,
**dadurch gekennzeichnet, dass** in dem Kühlkreislauf (20) ein Überdruckventil angeordnet ist.

15. Temperiervorrichtung nach einem der vorhergehenden Ansprüche,
**dadurch gekennzeichnet, dass** in dem Kühlkreislauf (20) ein Entlüftungsventil angeordnet ist.

16. Temperiervorrichtung nach einem der vorhergehenden Ansprüche,
**dadurch gekennzeichnet, dass** in dem Kühlkreislauf (20) ein Membranausdehnungsgefäß (29) oder ein gasüberlagerter Kühlkreislauf angeordnet ist.

17. Laborschrank, Klimaschrank, Kälteschrank oder Umweltsimulationsschrank (100) mit einem Probenraum (110) und einer Temperiervorrichtung (10-1, 10-2, 10-3) nach einem der vorhergehenden Ansprüche, wobei der Verbraucher-Wärmetauscher (24) derart angeordnet ist, dass er den Probenraum (110) temperiert.

18. Laborschrank, Klimaschrank, Kälteschrank oder Umweltsimulationsschrank (100) nach Anspruch 17,
**dadurch gekennzeichnet, dass** der externe Kältekreislauf (60), vorzugsweise einschließlich des zweiten Wärmetauschers (50), in einem von dem Probenraum (110) getrennten Maschinenraum (120) angeordnet ist, welcher insbesondere Lüftungsöffnungen aufweist.

19. Laborschrank, Klimaschrank, Kälteschrank oder Umweltsimulationsschrank (100) nach Anspruch 17 oder 18,
**dadurch gekennzeichnet, dass** der Probenraum (110) von einer Innenwandung (112) begrenzt ist, welche zumindest abschnittsweise von einer Außenwandung (114) umgeben ist, wobei auf einer Außenseite der Außenwandung (114) zumindest abschnittsweise eine Isolierung (116) angeordnet ist und die Isolierung (116) von einem Gehäuse (130) umgeben ist, wobei der Verbraucher-Wärmetauscher (24) zwischen der Innenwandung (112) und der Außenwandung (114) angeordnet ist.

20. Laborschrank, Klimaschrank, Kälteschrank oder Umweltsimulationsschrank (100) nach Anspruch 19,
**dadurch gekennzeichnet, dass** der Verdampfer (84) zwischen der Außenwandung (114) und der Isolierung (116) angeordnet ist.
